# EUROPEAN PATENT SPECIFICATION

(11) **EP 3 321 497 B1**
(45) Date of publication and mention of the grant of the patent: **01.01.2020**
(21) Application number: 17200665.2
(22) Date of filing: 08.11.2017
(51) Int. Cl.: F02M 35/16, F02M 35/10, F02M 35/08, F02M 35/04, F02M 35/02, B62J 99/00

(54) **SCOOTER TYPE MOTORCYCLE**
ROLLERARTIGES MOTORRAD
MOTOCYCLETTE DE TYPE SCOOTER

(30) Priority: 09.11.2016 JP 2016219016
(43) Date of publication of application: 16.05.2018
(73) Proprietor: Yamaha Hatsudoki Kabushiki Kaisha, Iwata-shi Shizuoka 438-8501 (JP)
(72) Inventor: YUIZONO, JUN, Iwata-shi, Shizuoka 438-8501 (JP); NAGATA, Takuya, Iwata-shi, Shizuoka 438-8501 (JP); HIGAKI, Yuji, Iwata-shi, Shizuoka 438-8501 (JP)
(74) Representative: Grünecker Patent- und Rechtsanwälte PartG mbB

(56) References cited:
- EP-A1- 1 533 515
- EP-A1- 2 527 179
- EP-A1- 2 952 708
- EP-A2- 1 186 771
- EP-A2- 1 526 273
- JP-A- 2013 147 991
- JP-A- 2014 015 842

## Description

The present invention relates to a scooter type motorcycle according to the preamble of independent claim 1. Such a scooter type motorcycle can be taken from the prior art document EP 1 533 515 A1. Moreover, prior art document EP 2 527 179 A1 discloses a scooter type motorcycle that comprises a rear wheel, a transmission unit disposed sideward of the rear wheel and a V-belt type continuously variable transmission disposed in the transmission unit. An air cleaner case is disposed above the transmission unit and including a downstream intake chamber formed therein. An intake duct is provided on the air cleaner case and an air cleaner case cover is disposed laterally outward of the air cleaner case and including a lower end portion positioned downward relative to an upper end of the transmission unit. The air cleaner case comprises a first side plate extending along a vehicle vertical axis and a vehicle fore-and-aft axis, a vertical plate, disposed upward relative to the transmission unit, extending laterally outward from the first side plate and extending along the vehicle vertical axis, a horizontal plate extending rearward from a lower end of the vertical plate and extending along a vehicle lateral axis. The horizontal plate is spaced upwardly apart from the transmission unit. A second side plate extends rearward along the vehicle fore-and-aft axis from a laterally outer end portion of the vertical plate and extends along the vehicle vertical axis from a laterally outer end portion of the horizontal plate. The intake duct pierces through the vertical plate and includes an inlet disposed frontward relative to a vehicle fore-and-aft midpoint of the air cleaner case and frontward relative to the vertical plate. An outlet is disposed rearward relative to the vertical plate. The air cleaner case cover comprises a spacing portion disposed sideward of the first side plate and spaced apart from the first side plate. A downwardly-extending portion extends downward. The spacing portion of the air cleaner case cover, the first side plate, and the vertical plate together define at least a portion of an upstream intake chamber. An intake port of the air intake means of the prior art documents EP 1 533 515 A1 and EP 2 527 179 A1 is located at a position forward relative to a vehicle front and aft midpoint of the air cleaner case and said port is directly open to the left side of the vehicle, i.e. the side opposite to the side of location of the rear wheel. Moreover, the prior art document EP 2 527 179 A1 discloses a labyrinth structure provided to prevent entrance of mud and water from the right side, i.e. from the side of location of the rear wheel directly under the intake port.

A scooter type motorcycle is conventionally known which is equipped with an internal combustion engine, a V-belt type continuously variable transmission (hereinafter referred to as "CVT"), and an air cleaner disposed above a transmission unit accommodating the CVT.

The air cleaner cleans the air that is to be supplied to the internal combustion engine. It is necessary to prevent mud or water from entering the air cleaner. JP 2015-229432 A discloses an air cleaner including an air cleaner case in which its inside is divided by a filter element into an unfiltered-air chamber and a filtered-air chamber, an intake duct attached to the air cleaner case so as to communicate with the unfiltered chamber and having an air inlet port directed frontward, and a cover member disposed laterally outward of the air cleaner case. The cover member is spaced laterally outwardly away from the air cleaner case, and an intake passage is formed between the cover member and the air cleaner case. The air inlet port is positioned frontward relative to the fore-and-aft midpoint of the air cleaner case. An air inlet for introducing air into the intake passage is formed at a location that is in a rear part of the cover member and in a portion of the air cleaner case that is positioned rearward relative to the fore-and-aft midpoint of the air cleaner case.

In the scooter type motorcycle disclosed in JP 2015-229432, the air inlet is formed at a location that is positioned rearward relative to the fore-and-aft midpoint of the air cleaner case, so water or dust does not easily enter the air inlet from the front. Moreover, the distance from the air inlet of the intake passage to the air intake port of the intake duct is long. This means that even if water or dust enters the air inlet, the risk of sucking the water or dust into the intake duct is small. This effectively prevents the air cleaner from the entry of water or dust into the air cleaner with the air cleaner being disposed above the transmission unit.

However, the scooter type motorcycle disclosed in JP 2015-229432 A needs the cover member that is spaced laterally outwardly away from the air cleaner case. Moreover, in order to allow the intake passage formed between the air cleaner case and the cover member to have a sufficient flow passage cross-sectional area, the gap between the cover member and the air cleaner case needs to be sufficiently large. Consequently, the cover member has a tendency to protrude laterally outward. This has been an obstacle to reducing the lateral dimension of the motorcycle.

The present invention has been accomplished in view of the foregoing and other problems, and it is an object of the invention to provide a scooter type motorcycle that enables the intake passage that is upstream of the intake duct to have a sufficient length while the air cleaner is disposed above the transmission unit, so that the lateral dimension of the vehicle can be kept small. According to the present invention said object is solved by a scooter type motorcycle having the features of independent claim 1. Preferred embodiments are laid down in the dependent claims.

Accordingly, a scooter type motorcycle includes: a rear wheel; a transmission unit disposed sideward of the rear wheel - the transmission unit is disposed at least partly overlapping of the rear wheel in a side view of the motorcycle, i.e. the view along a lateral axis in left/right direction -; a V-belt type continuously variable transmission disposed in the transmission unit; an air cleaner case disposed above the transmission unit - the air cleaner case is disposed at least partly overlapping of the transmission unit in a top view of the motorcycle, i.e. the view along a vertical axis in up/down direction - and including a downstream intake chamber formed therein; an intake duct provided on the air cleaner case; and an air cleaner case cover disposed laterally outward of the air cleaner case and including a lower end portion positioned downward relative to an upper end of the transmission unit. The air cleaner case includes: a first side plate extending along a vehicle vertical axis and a vehicle fore-and-aft axis; a vertical plate, disposed upward relative to the transmission unit, extending laterally outward from the first side plate and extending along the vehicle vertical axis; a horizontal plate extending rearward from a lower end of the vertical plate and extending along a vehicle lateral axis, the horizontal plate spaced upwardly apart from the transmission unit; and a second side plate extending rearward along the vehicle fore-and-aft axis from a laterally outer end portion of the vertical plate and extending along the vehicle vertical axis from a laterally outer end portion of the horizontal plate. The intake duct pierces through the vertical plate and includes an inlet disposed frontward relative to a vehicle fore-and-aft midpoint of the air cleaner case and frontward relative to the vertical plate, and an outlet disposed rearward relative to the vertical plate. The air cleaner case cover includes a spacing portion disposed sideward of the first side plate - the air cleaner case is disposed at least partly overlapping of the air cleaner case in a side view of the motorcycle, i.e. the view along a lateral axis in left/right direction - and spaced apart from the first side plate, an overlaying portion overlaying the second side plate so as not to be spaced apart from the second side plate, and a downwardly-extending portion extending downward from the overlaying portion. The spacing portion of the air cleaner case cover, the first side plate, and the vertical plate together define at least a portion of an upstream intake chamber. The horizontal plate, the transmission unit, and the downwardly-extending portion of the air cleaner case cover together form an intake passage being connected to the upstream intake chamber and having an intake port located rearward relative to the vehicle fore-and-aft midpoint.

In the above-described scooter type motorcycle, the intake passage is formed between the transmission unit and the downwardly-extending portion of the air cleaner case cover. No gap for forming the intake passage is provided between the overlaying portion of the air cleaner case cover and the second side plate of the air cleaner case. As a result, the air cleaner case cover is inhibited from protruding laterally outward, so that the lateral dimension can be kept small. In addition, the inlet of the intake duct is disposed frontward relative to the vehicle fore-and-aft midpoint of the air cleaner case, and the intake port of the intake passage is positioned rearward relative to the vehicle fore-and-aft midpoint of the air cleaner case. This enables the intake passage that is upstream of the intake duct to have a sufficient length. Thus, while the air cleaner is disposed above the transmission unit, the intake passage that is upstream of the intake duct is allowed to have a sufficient length, so that the lateral dimension can be kept small.

In one preferred embodiment, the scooter type motorcycle includes a pre-filter element disposed between the horizontal plate and the transmission unit and inside the intake passage.

Because the intake passage has a sufficient length, the intake passage has sufficient space for accommodating the pre-filter element. The just-described preferred embodiment enables the pre-filter element to clean the air in the intake passage that is upstream of the intake duct.

In another preferred embodiment, the transmission unit includes a lower inclined portion inclined laterally more outward toward its top, and an upper inclined portion positioned above the lower inclined portion and inclined laterally more inward toward its top, the lower inclined portion and the upper inclined portion disposed in a region rearward relative to the intake port of the intake passage along the vehicle fore-and-aft axis.

According to the just-described preferred embodiment, mud and dust swirled up from the road surface are likely to be blocked by the lower inclined portion. The mud and dust can be prevented from moving along the surface of the transmission unit and entering the intake passage.

In another preferred embodiment, the scooter type motorcycle further includes an additional intake duct provided in the transmission unit and positioned frontward relative to the fore-and-aft midpoint of the transmission unit. At least one of the air cleaner case and the air cleaner case cover includes a partition plate disposed between the intake duct and the additional intake duct.

The just-described preferred embodiment makes it possible to prevent the air that has flowed through the intake passage from being sucked into the additional intake duct. The air inside the intake passage can be introduced smoothly into the intake duct.

In another preferred embodiment, the scooter type motorcycle includes a collecting member disposed inside the downstream intake chamber, at least a portion of the collecting member being disposed on an extension line of a center line of the intake duct extending from the outlet.

According to the just-described preferred embodiment, the air that has flowed from the intake duct into the downstream intake chamber blows against the collecting member. Dust and water contained in the air are collected by the collecting member. With the collecting member, the air from the intake duct can be cleaned.

In another preferred embodiment, the scooter type motorcycle includes a resonator including an inlet disposed in the upstream intake chamber.

The just-described preferred embodiment makes it possible to reduce air intake noise from the upstream intake chamber. Thus, air intake noise from the air cleaner is reduced.

in another preferred embodiment, the air cleaner case includes a first case part including the first side plate, the vertical plate, the horizontal plate, and the second side plate; and a second case part disposed laterally inward of the first case part and assembled to the first case part. The air cleaner includes a partition plate disposed between the first case part and the second case part, and a filter element disposed on the partition plate. The resonator includes a chamber defined by the partition plate and the first side plate of the first case part.

The first case part and the partition plate, to which the filter element is attached, are component parts inherently provided in the air cleaner. The just-described preferred embodiment does not require dedicated component parts for forming the resonator. Moreover, the resonator does not project laterally outward relative to the first case part. Thus, although the resonator is provided, parts count is reduced, and the lateral dimension is kept small.

In another preferred embodiment, the air cleaner case includes a first case part including the first side plate, the vertical plate, the horizontal plate, and the second side plate; and a second case part disposed laterally inward of the first case part and fastened to the first case part by threaded fasteners. The air cleaner includes a filter element disposed between the first case part and the second case part. The air cleaner case cover includes holes positioned on extension lines of the center axes of the threaded fasteners.

According to the present preferred embodiment, a tool such as a screw driver may be inserted into the holes to rotate the threaded fasteners, so that the first case part is allowed to be removed from the second case part. This means that the first case part may be removed from the second case part without removing the air cleaner case cover from the first case part, so that the filter element may be replaced. This affords easy replacement of the filter element.

### ADVANTAGEOUS EFFECTS OF INVENTION

As described above, the present invention makes it possible to provide a scooter type motorcycle that enables the intake passage that is upstream of the intake duct to have a sufficient length while the air cleaner is disposed above the transmission unit, so that the lateral dimension can be kept small.

### BRIEF DESCRIPTION OF DRAWINGS

Fig. 1 is a side view illustrating a scooter type motorcycle according to a preferred embodiment.
Fig. 2 is an enlarged side view illustrating a rear portion of the scooter type motorcycle.
Fig. 3 is a plan view illustrating a power unit and a rear wheel.
Fig. 4 is a cross-sectional view taken along line IV-IV in Fig. 2.
Fig. 5 is a cross-sectional view taken along line V-V in Fig. 2.
Fig. 6 is a cross-sectional view taken along line VI-VI in Fig. 2.
Fig. 7 is a side view illustrating an air cleaner and a transmission unit from which an air cleaner case cover has been removed.
Fig. 8 is a cross-sectional view taken along line VIII-VIII in Fig. 3.
Fig. 9 is a cross-sectional view taken along line IX-IX in Fig. 2.

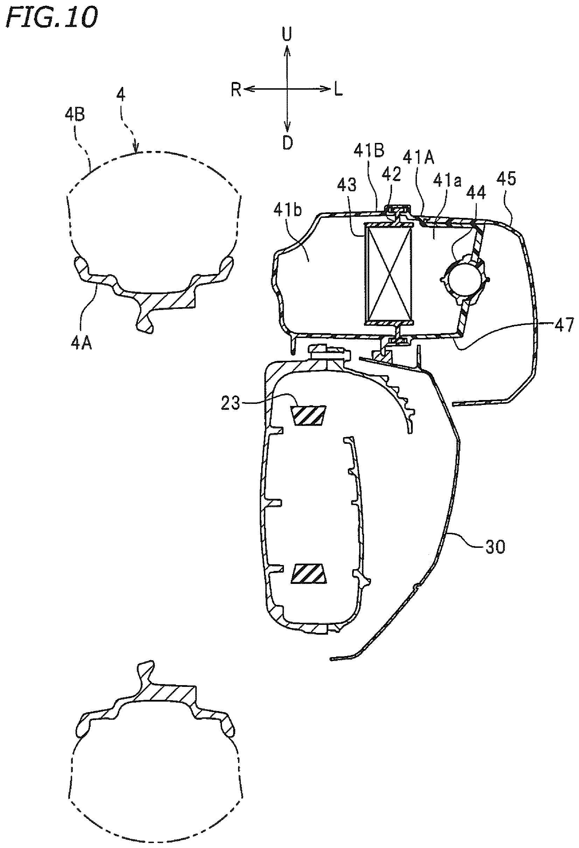

Fig. 10 is a cross-sectional view taken along line X-X in Fig. 2.
Fig. 11 is a cross-sectional view taken along line XI-XI in Fig. 2.
Fig. 12A is a schematic diagram for illustrating an area of opening between an air cleaner case cover and a transmission case cover.
Fig. 12B is a schematic diagram for illustrating areas of opening of a front intake port and a side intake port.

### DESCRIPTION OF EMBODIMENTS

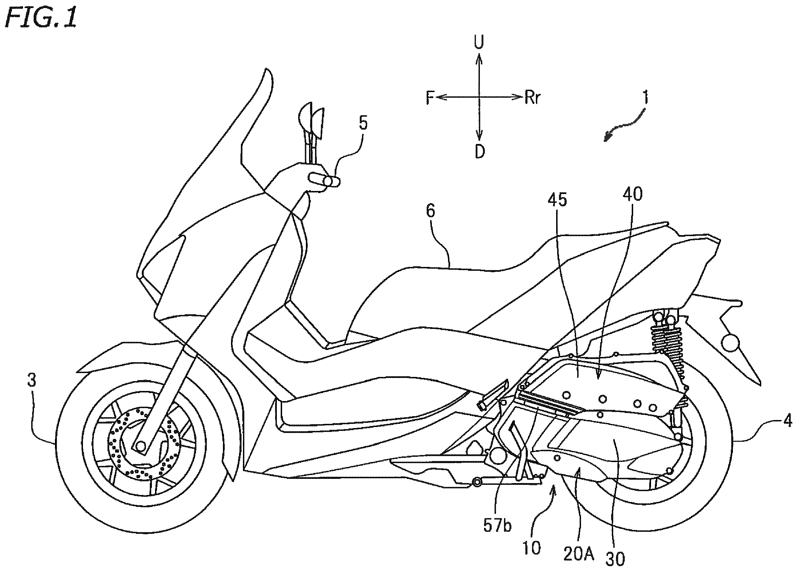

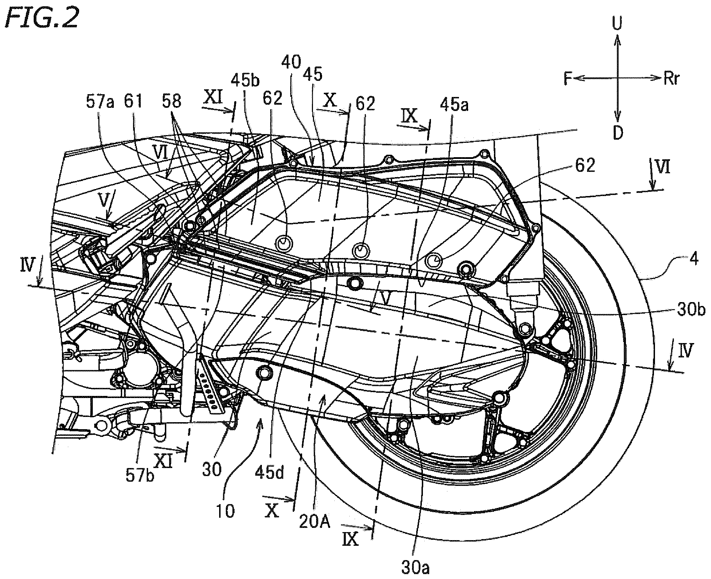

Hereinbelow, a scooter type motorcycle according to one preferred embodiment will be described with reference to the drawings. Fig. 1 is a side view illustrating a scooter type motorcycle (hereinafter referred to simply as "motorcycle") 1 according to the present preferred embodiment. Fig. 2 is an enlarged side view illustrating part of a rear portion of the motorcycle 1. As illustrated in Fig. 1, the motorcycle 1 includes a body frame, which is not shown, a front wheel 3, a rear wheel 4, a handlebar 5, a seat 6, and a power unit 10. The power unit 10 is supported by a pivot shaft (not shown) swingably to the body frame.

In the following description, unless specifically indicated otherwise, the terms "front," "rear," "left," "right," "up," and "down" respectively refer to front, rear, left, right, up, and down as defined based on the perspective of an imaginary rider (not shown) seated on the seat 6 when the motorcycle 1 is assumed to be standing at a standstill on a horizontal plane in an unloaded condition. In particular, the motorcycle 1 is assumed to be standing in an upright (non-leaning) condition. The phrase "unloaded condition" means a condition in which the motorcycle 1 does not carry any rider or fuel. Reference characters F, Rr, L, R, U, and D in the drawings represent front, rear, left, right, up, and down, respectively. The term "frontward" herein means motorcycle's frontward in its fore-and-aft orientation. The term "rearward" herein means motorcycle's rearward in its fore-and-aft orientation.

Unless specifically indicated otherwise, the term "frontward" is not intended to be limited to a horizontal frontward direction, but is meant to include directions inclined within the range of -45° to +45° with respect to the horizontal frontward direction. Likewise, the term "rearward" is not intended to be limited to a horizontal rearward direction, but is meant to include directions inclined within the range of -45° to +45° with respect to the horizontal rearward direction. The term "leftward" is not intended to be limited to a laterally leftward direction, but is meant to include directions inclined within the range of -45° to +45° with respect to that direction. Likewise, the term "rightward" is not intended to be limited to a laterally rightward direction, but is meant to include directions inclined within the range of - 45° to +45° with respect to that direction. The term "upward" is not intended to be limited to a vertically upward direction, but is meant to include directions inclined within the range of -45° to +45° with respect to the vertically upward direction. The term "downward" is not intended to be limited to a vertically downward direction, but is meant to include directions inclined within the range of -45° to +45° with respect to the vertically downward direction.

Unless specifically indicated otherwise, a "front portion" of an item means a portion of the item that is located frontward relative to the vehicle fore-and-aft midpoint of the item. A "rear portion" of an item means a portion of the item that is located rearward relative to the vehicle fore-and-aft midpoint of the item. An "upper portion" of an item means a portion of the item that is located upward relative to the vertical midpoint of the item. A "lower portion" of an item means a portion of the item that is located downward relative to the vertical midpoint of the item. A "left portion" of an item means a portion of the item that is located leftward relative to the lateral midpoint of the item. A "right portion" of an item means a portion of the item that is located rightward relative to the lateral midpoint of the item. Note that the term "lateral axis" herein is used interchangeably to refer to a vehicle's widthwise axis, i.e., a left-to-right/right-to-left axis.

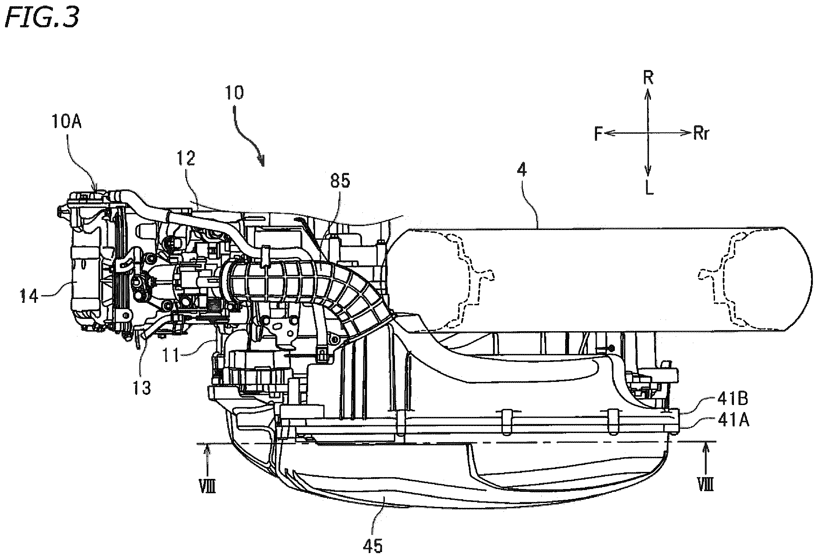

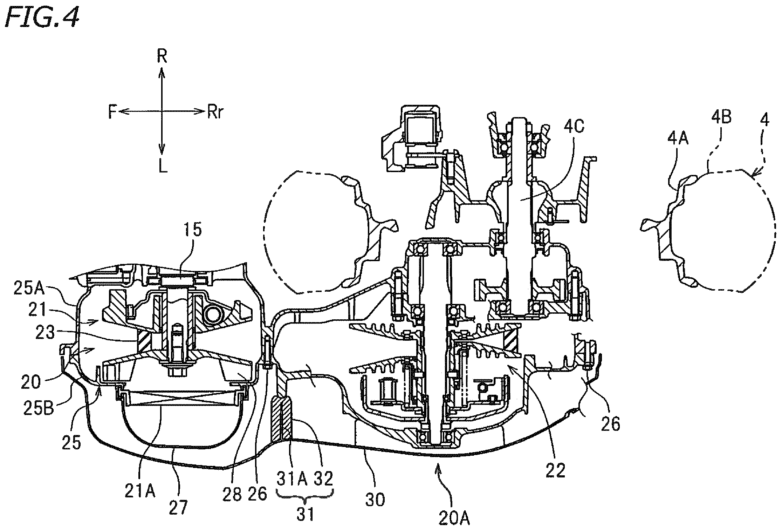

As illustrated in Fig. 3, the power unit 10 includes an internal combustion engine 10A as a driving power source. The power unit 10 includes a crankcase 11, a cylinder body 12 connected to the crankcase 11, a cylinder head 13 connected to the cylinder body 12, and a cylinder head cover 14 connected to the cylinder head 13. A crankshaft 15 (see Fig. 4) is disposed inside the crankcase 11. Although not shown in the drawings, at least one cylinder that slidably accommodates a piston is disposed inside the cylinder body 12. The piston(s) and the crankshaft are coupled to each other via a connecting rod. The cylinder body 12 and the cylinder head 13 together forms a combustion chamber above the piston(s). The center line of the cylinder (i.e., the cylinder axis) extends frontward. The angle formed by the cylinder axis and the horizontal line as viewed in a side view of the vehicle is not limited to any specific angle. However, in the present preferred embodiment, the angle is set at 45 degrees or less. The just-mentioned angle may be from 0 degrees to 30 degrees, or may be from 0 degrees to 15 degrees.

Fig. 4 is a cross-sectional view taken along line IV-IV in Fig. 2. Disposed to the left of the crankcase 11 are a transmission case 25, a V-belt type continuously variable transmission (hereinafter abbreviated as CVT) 20, and a transmission case cover 30 covering a left portion of the transmission case 25. The CVT 20, the transmission case 25, and the transmission case cover 30 together constitute a transmission unit 20A. The transmission case 25 includes a first case part 25A and a second case part 25B. The second case part 25B is disposed laterally outward of the first case part 25A. It should be noted that the term "laterally outward" herein means a direction away from the vehicle center line. On the other hand, the term "laterally inward" herein means a direction toward the vehicle center line. The first case part 25A and the second case part 25B are fastened together by bolts 26.

The CVT 20 includes a drive pulley 21, a driven pulley 22 disposed to the rear of the drive pulley 21, and a V-belt 23 wrapped around the drive pulley 21 and the driven pulley 22. The drive pulley 21 is joined to the crankshaft 15. The drive pulley 21 may be joined directly to the crankshaft 15 or joined indirectly to the crankshaft 15 via another member. The drive pulley 21 is driven by the crankshaft 15 to rotate. The rear wheel 4 includes a wheel 4A, a tire 4B, and an axle shaft 4C. The driven pulley 22 is joined to the axle shaft 4C via gears, which are not shown in the drawings.

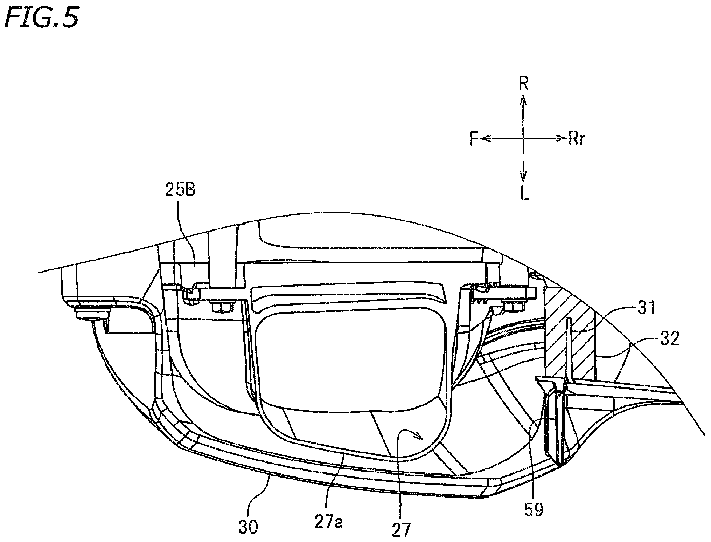

The transmission case 25 is provided with an intake duct 27. The intake duct 27 is provided in the second case part 25B. The drive pulley 21 is provided with a fan 28 for sucking the air. The intake duct 27 is provided laterally outward of the drive pulley 21. A filter 21A is disposed between the drive pulley 21 and the intake duct 27. Fig. 5 is a cross-sectional view taken along line V-V in Fig. 2. The intake duct 27 opens upwardly. The upper end of the intake duct 27 forms an inlet 27a for introducing the air therein. The inlet 27a is disposed frontward relative to the midpoint of the transmission unit 20A along the vehicle fore-and-aft axis. The inlet 27a is disposed frontward relative to the midpoint of the transmission case 25 along the vehicle fore-and-aft axis. The air sucked through the inlet 27a is cleaned by the filter 21A. The cleaned air then flows into the transmission case 25. Although not shown, an air outlet port for discharging air is formed in a portion of the second case part 25B that is beside or below the driven pulley 22. As the fan 28 rotates in association with rotation of the drive pulley 21, the air is sucked from outside through the intake duct 27 into the transmission case 25. After flowing through a surrounding region around the CVT 20, the air is discharged out of the transmission case 25 through the air outlet port. The CVT 20 is cooled by the air.

As illustrated in Fig. 4, the transmission case cover 30 is furnished with a partition 31 extending laterally inward. The partition 31 has a partition plate 31A and a sponge 32. The partition 31 separates the intake duct 27 and the air outlet port from each other. This prevents the hot air that is discharged from the air outlet port from being sucked into the intake duct 27. The sponge 32 is disposed around the partition plate 31A. The sponge 32, however, may be eliminated. The partition 31 may consist only of the partition plate 31A.

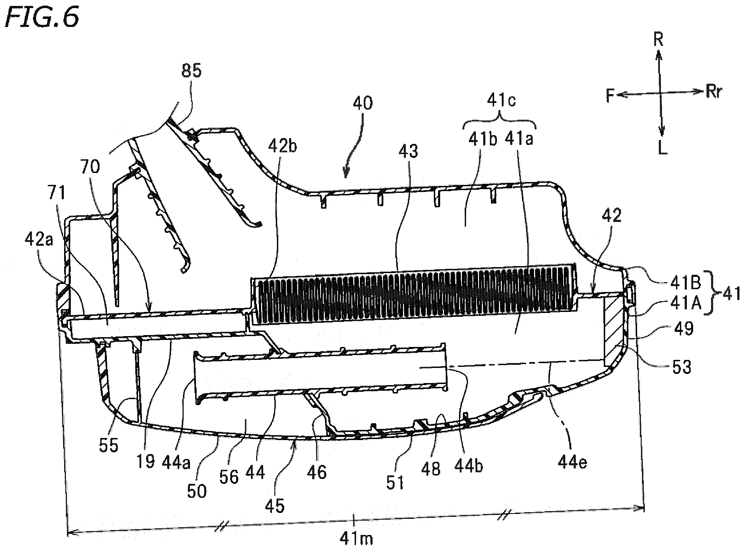

As illustrated in Fig. 2, an air cleaner 40 is disposed above the transmission case 25 and the transmission case cover 30. Fig. 6 is a cross-sectional view taken along line VI-VI in Fig. 2. As illustrated in Fig. 6, the air cleaner 40 includes an air cleaner case 41, a filter element 43, an intake duct 44, and an air cleaner case cover 45.

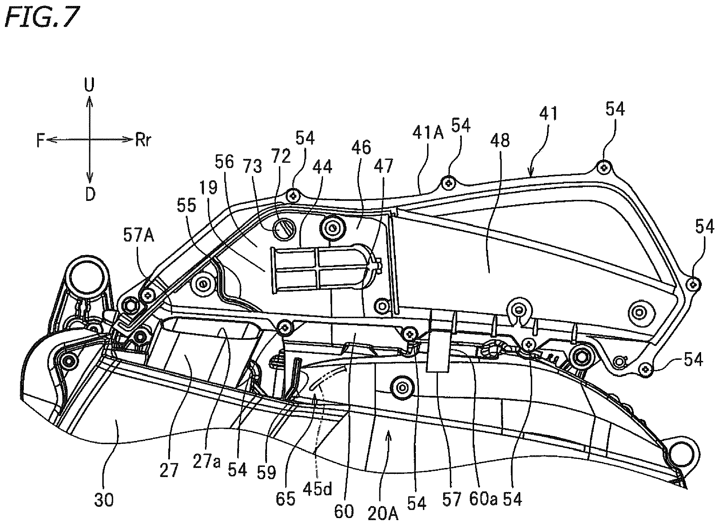

The air cleaner case 41 includes a first case part 41A and a second case part 41B. The second case part 41B is disposed laterally inward of the first case part 41A. The second case part 41B is assembled to the first case part 41A. Fig. 7 is a side view illustrating the air cleaner 40 and the transmission unit 20A from which the air cleaner case cover 45 has been removed. As illustrated in Fig. 7, the first case part 41A and the second case part 41B are fastened together by bolts 54. As illustrated in Fig. 6, a partition plate 42 is disposed between the first case part 41A and the second case part 41B. The partition plate 42 includes a plate portion 42a and an opening 42b. The filter element 43 is fitted to the opening 42b. The interior of the air cleaner case 41 is divided by the filter element 43 into an unfiltered-air chamber 41a and a filtered-air chamber 41b. The unfiltered-air chamber 41a is positioned to the left of the filter element 43, and the filtered-air chamber 41b is positioned to the right of the filter element 43.

The second case part 41B is connected to an intake pipe 85. The intake pipe 85 has an opening that is open inside the filtered-air chamber 41b. As illustrated in Fig. 3, the intake pipe 85 is connected to the cylinder head 13. Although not shown in the drawings, an intake port is formed in the cylinder head 13, and the intake pipe 85 is connected to the intake port.

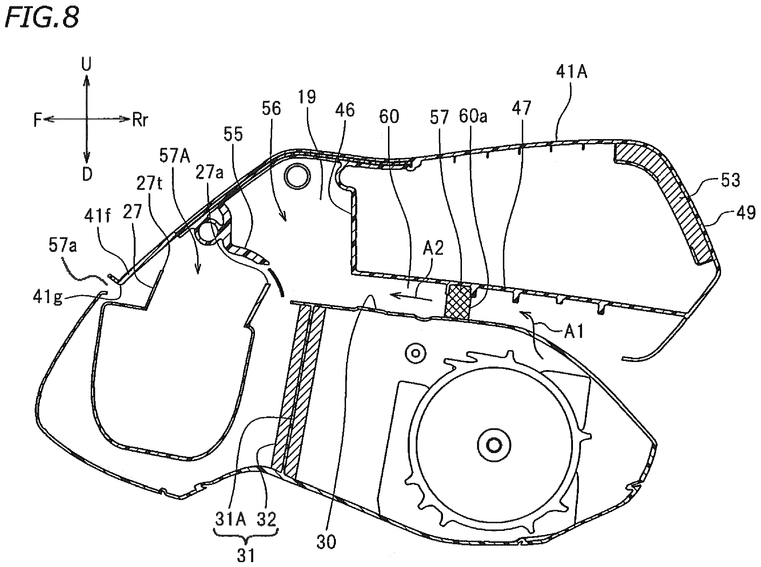

The first case part 41A includes a first side plate 19 extending along the vehicle vertical axis and along the vehicle fore-and-aft axis, and a vertical plate 46 extending laterally outward from the first side plate 19 and extending along the vehicle vertical axis. Fig. 8 is a cross-sectional view taken along line VIII-VIII in Fig. 3. As illustrated in Fig. 8, the first case part 41A includes a horizontal plate 47 extending rearward from the lower end of the vertical plate 46 and extending along the vehicle lateral axis. The horizontal plate 47 is disposed above the transmission case 25 and spaced apart from the transmission case 25. As illustrated in Fig. 6, the first case part 41A includes a second side plate 48 extending rearward along the vehicle fore-and-aft axis from a laterally outer end portion of the vertical plate 46 and extending along the vehicle vertical axis from a laterally outer end portion of the horizontal plate 47. The first case part 41A also includes a vertical plate 49 extending along the vehicle vertical axis from a rear end portion of the horizontal plate 47 and extending laterally inward from a rear end portion of the second side plate 48. The vertical plate 49 is positioned at the rear of the vertical plate 46. The vertical plate 46 may be perpendicular to the first side plate 19. However, in the present preferred embodiment, the vertical plate 46 is inclined rearward toward the left with respect to the first side plate 19. The first side plate 19, the vertical plate 46, the horizontal plate 47, the second side plate 48, and the vertical plate 49 may be either flat plates or curved plates. The shapes of the first side plate 19, the vertical plate 46, the horizontal plate 47, the second side plate 48, and the vertical plate 49 are not limited to specific shapes.

An intake duct 44 penetrates through the vertical plate 46. The intake duct 44 includes an inlet 44a positioned in front of the vertical plate 46 and an outlet 44b positioned behind the vertical plate 46. The inlet 44a is formed into a shape that is wider toward its end. In other words, the inlet 44a is formed into what is called a bell mouth shape. The inlet 44a is disposed outside the air cleaner case 41. The outlet 44b is disposed inside the air cleaner case 41. The outlet 44b has an opening that opens in the interior of the unfiltered-air chamber 41a. The intake duct 44 extends along the vehicle fore-and-aft axis. The intake duct 44 may be either in a linear shape or a curved shape. The center line of the intake duct 44 may be either parallel or non-parallel to the vehicle fore-and-aft axis. In the present preferred embodiment, the intake duct 44 is formed to be parallel to the vehicle fore-and-aft axis and in a linear shape. The filter element 43 is also disposed to be parallel to the vehicle fore-and-aft axis. The intake duct 44 is disposed parallel to the filter element 43.

A collecting member 53 is secured to the vertical plate 49. The collecting member 53 is a member for collecting dust or water in the air, which is made of a sponge, for example. The material for the collecting member 53 is, however, not limited to a particular material. The collecting member 53 is disposed in the unfiltered-air chamber 41a inside the air cleaner case 41. At least a portion of the collecting member 53 is disposed on the extension line 44e of the center line of the intake duct 44 that extends from the outlet 44b.

The air cleaner case cover 45 is disposed laterally outward of the air cleaner case 41. The air cleaner case cover 45 is assembled to the air cleaner case 41. Although not shown in the drawings, the air cleaner case cover 45 is fastened to the first case part 41A by threaded fasteners. In the present description, the term "threaded fastener" means a fastener having an external helical thread, and threaded fasteners include bolts and screws, for example. As already mentioned above, the first case part 41A and the second case part 41B of the air cleaner case 41 are fastened to each other by threaded fasteners 54 (see Fig. 7). The air cleaner case cover 45 has holes 62 positioned on the extension lines of the threaded fasteners 54. The threaded fasteners 54 can be screwed in or out by inserting a tool such as a screwdriver into the holes 62. Without removing the air cleaner case cover 45 from the first case part 41A, the threaded fasteners 54 can be screwed in or out. This means that without removing the air cleaner case cover 45 from the first case part 41A in advance, the threaded fasteners 54 can be rotated by a tool inserted into the holes 62, so that the first case part 41A can be removed from the second case part 41B. This affords easy replacement work of the filter element 43.

As illustrated in Figs. 6 and 8, the air cleaner case cover 45 is provided with a partition plate 55 for separating the inlet 27a of the intake duct 27 and the inlet 44a of the intake duct 44 from each other. The partition plate 55 extends laterally inwardly from the air cleaner case cover 45. The shape of the partition plate 55 is not limited to a particular shape. However, in the present preferred embodiment, the partition plate 55 extends gradually downward toward the rear when viewed in a side view of the vehicle, as illustrated in Fig. 8. It is also possible that the partition plate 55 may be provided on the air cleaner case 41. That is, the air cleaner case cover 41 may be provided with a partition plate 55 extending laterally outward from the air cleaner case 41. Alternatively, the partition plate 55 may be formed by a partition plate part extending laterally inward from the air cleaner case cover 45 and another partition plate part extending laterally outward from the air cleaner case 41. It is possible that a sponge may or may not be disposed around the partition plate 55. The first side plate 19, the vertical plate 46, the partition plate 55, and the transmission case 25 together define an upstream intake chamber 56 around the inlet 44a of the intake duct 44. The inlet 44a of the intake duct 44 has an opening that is open in the interior of the upstream intake chamber 56.

As illustrated in Fig. 6, the air cleaner 40 includes a resonator 70 for reducing air intake noise. The resonator 70 includes a chamber 71, defined by the first side plate 19 of the first case part 41A and the plate portion 42a of the partition plate 42, and a tube 72 (see Fig. 7), extending laterally outward from the first case part 41A within the upstream intake chamber 56. An inlet 73 is formed at an end of the tube 72. The inlet 73 has an opening that is open in the interior of the upstream intake chamber 56. In the present preferred embodiment, the inlet 73 is disposed above the intake duct 44. The center of the inlet 73 is positioned rearward relative to the front end of the intake duct 44. It should be noted, however, that the position of the inlet 73 is not limited to a particular position. The chamber 71 is disposed between the upstream intake chamber 56 and the filtered-air chamber 41b. Note that the filtered-air chamber 41b forms the downstream intake chamber. The chamber 71 is formed in a laterally compact shape, which is elongated along the fore-and-aft axis. The lateral dimension of the chamber 71 is smaller than the fore-and-aft dimension thereof.

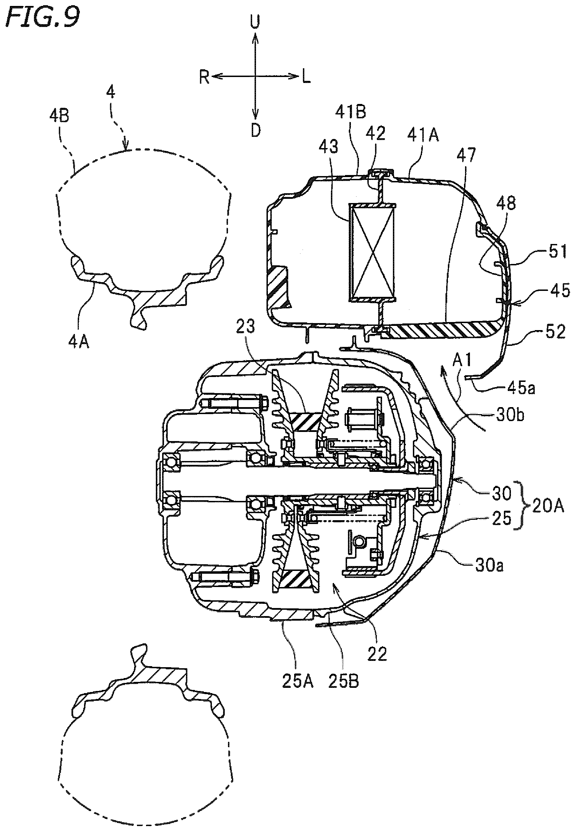

Fig. 9 is a cross-sectional view taken along line IX-IX in Fig. 2. As illustrated in Fig. 9, the air cleaner case cover 45 includes an overlaying portion 51 overlaying the second side plate 48 of the air cleaner case 41, and a downwardly-extending portion 52 extending downward from the overlaying portion 51. The overlaying portion 51 is not spaced away from the second side plate 48, and no gap such as to allow the air to flow through is provided between the overlaying portion 51 and the second side plate 48. As illustrated in Fig. 8, the downwardly-extending portion 52, the horizontal plate 47, and the transmission case cover 30 together define an intake passage 60 extending along the vehicle fore-and-aft axis. The front end portion of the intake passage 60 is connected to the upstream intake chamber 56. The rear end portion of the intake passage 60 is open. The rear end portion of the intake passage 60 forms a rear intake port 60a. The rear intake port 60a is positioned rearward relative to the vehicle fore-and-aft midpoint 41m (see Fig. 6) of the air cleaner case 41. A pre-filter element 57 is disposed between the horizontal plate 47 and the transmission case cover 30 and inside the intake passage 60. The pre-filter element 57 serves to clean the air A2 passing through the intake passage 60. The form of the pre-filter element 57 and the materials for the pre-filter element 57 are not limited to any particular form or material. Herein, the pre-filter element 57 is formed of sponge.

As illustrated in Fig. 9, a gap is provided behind the rear intake port 60a between the air cleaner case cover 45 and the transmission case cover 30. Hereinafter, a portion of the air cleaner case cover 45 that is located rearward relative to the rear intake port 60a is referred to as a rear intake section 45a. A gap that is at least sidewardly open is provided between the rear intake section 45a and the transmission case cover 30. The air A1 that is sucked sidewardly through this gap flows through the rear intake port 60a into the intake passage 60. In a region that is rearward relative to the rear intake port 60a, the transmission case cover 30 includes a lower inclined portion 30a inclined laterally more outward toward its top, and an upper inclined portion 30b inclined more inward toward its top. The upper inclined portion 30b is positioned above the lower inclined portion 30a. As illustrated in Fig. 2, the upper inclined portion 30b and the lower inclined portion 30a are disposed below the rear intake section 45a, as viewed in a side view of the vehicle.

The front portion of the air cleaner case 41 is disposed above the intake duct 27. As illustrated in Fig. 8, the lower end 41g of the front portion 41f of the air cleaner case 41 is disposed downward relative to the upper end 27t of the intake duct 27. The front portion 41f of the air cleaner case 41 covers a surrounding portion of the inlet 27a of the intake duct 27. As illustrated in Fig. 2, the air cleaner case cover 45 includes a front intake section 45b positioned at a side of the front portion 41f of the air cleaner case 41. The lower end of the front intake section 45b is disposed downward relative to the upper end of the intake duct 27. As illustrated in Fig. 8, the front portion 41f of the air cleaner case 41, the partition plate 55, and the front intake section 45b together define an intake chamber 57A around the inlet 27a of the intake duct 27. The inlet 27a of the intake duct 27 has an opening that is open in the interior of the intake chamber 57A.

A gap is provided vertically between the front portion 41f of the air cleaner case 41 and the transmission case cover 30. This gap forms a front intake port 57a for sucking air from the front toward the intake duct 27. As illustrated in Fig. 2, a gap is provided vertically between the front intake section 45b of the air cleaner case 45 and the transmission case cover 30. This gap forms a side intake port 57b for sucking air from a side toward the intake duct 27. The front intake section 45b is provided with ribs 58 extending along the vehicle fore-and-aft axis. The ribs 58 are linear protrusions protruding laterally outward and extending along the vehicle fore-and-aft axis. Although a plurality of ribs 58 are provided in the present preferred embodiment, it is possible that the number of the ribs 58 may be 1.

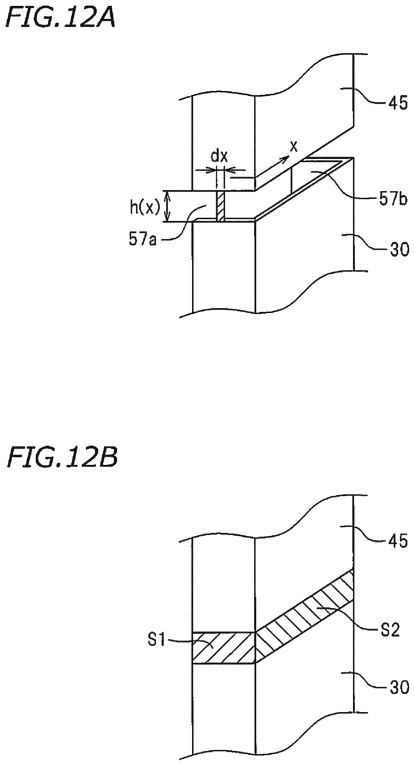

The area of the opening between the air cleaner case cover 45 and the transmission case cover 30 is larger than the minimum flow passage cross-sectional area of the intake duct 27.
As illustrated in Fig. 12A, an area S of the opening between the air cleaner case cover 45 and the transmission case cover 30 is defined as S=∫ h(x)dx, where x denotes a coordinate axis along the periphery of the lower edge of the air cleaner case cover 45 or the upper edge of the transmission case cover 30, and h(x) denotes a gap between the lower edge of the air cleaner case cover 45 and the upper edge of the transmission case cover 30 along the vertical line. S1 and S2 shown in Fig. 12B denote an area of opening of the front intake port 57a and the side intake port 57b, respectively. In the present preferred embodiment, the total area S1+S2 of the openings of the front intake port 57a and the side intake port 57b is larger than the minimum flow passage cross-sectional area of the intake duct 27. It is also possible that the area S2 of the opening of the side intake port 57b may be larger than the minimum flow passage cross-sectional area of the intake duct 27. Note that the term "flow passage cross-sectional area" means an area of the cross section of a flow passage that is orthogonal to the central axis of the flow passage.

As illustrated in Figs. 5 and 7, a portion of the transmission case cover 30 that is behind the intake duct 27 is furnished with a plate member 59 extending laterally outward. As illustrated in Fig. 7, the air cleaner case cover 45 includes a wall portion 45d positioned behind the plate member 59. The lower end of the wall portion 45d is positioned downward relative to the upper end of the plate member 59. The plate member 59 and the wall portion 45d together form a labyrinth structure 65 at the rear of the intake duct 27.

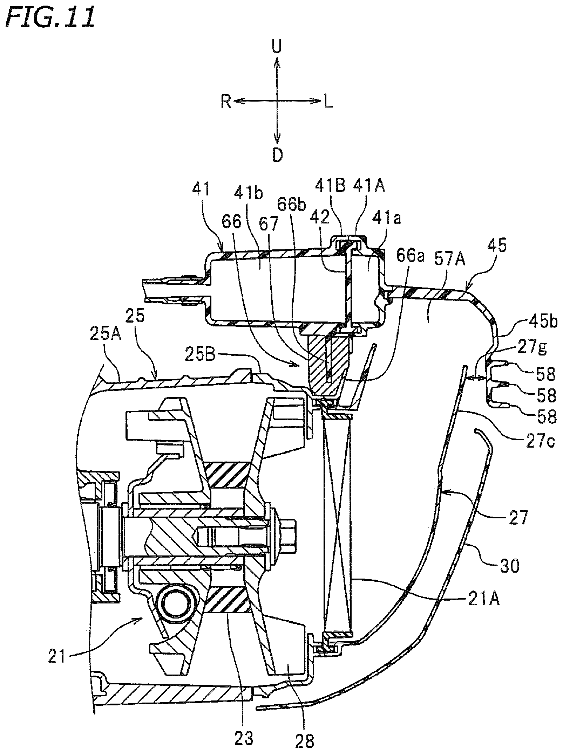

Fig. 11 is a cross-sectional view taken along line XI-XI in Fig. 2. As illustrated in Fig. 11, a laterally outward portion 27c of the intake duct 27 is inclined laterally more outward toward its top, with respect to the vertical line. A gap 27g between the portion 27c and the front intake section 45b of the air cleaner case 45 narrows toward the top end of the intake duct 27. It is also possible that the intake duct 27 may have a portion in which a gap with the transmission case cover 30 narrows toward its top end. The upper end of the intake duct 27 is positioned upward relative to the lower end of the front intake section 45b. The front intake section 45b and the upper portion of the intake duct 27 together form a labyrinth structure.

Furthermore, another labyrinth structure 66 is formed above the transmission case 25 and laterally inward of the intake duct 27. The labyrinth structure 66 includes a plate member 66a extending upward from the transmission case cover 30 and a plate member 66b extending downward from the air cleaner case 41. The upper end of the plate member 66a is positioned upward relative to the lower end of the plate member 66b. Although the plate member 66a is disposed laterally outward relative to the plate member 66b in the present preferred embodiment, the plate member 66a may be disposed laterally inward relative to the plate member 66b. Although the plate member 66a is provided on the transmission case cover 30 in the present preferred embodiment, the plate member 66a may be provided on the transmission case 25. Although the plate member 66a is provided on the second case part 41B, it is also possible that the plate member 66a be provided on the first case part 41A. A sponge 67 is disposed around the plate member 66b. It is, however, also possible to eliminate the sponge 67.

As has been described above, the above-described scooter type motorcycle 1 includes the horizontal plate 47 of the air cleaner case 41, the transmission unit 20A, and the downwardly-extending portion 52 of the air cleaner case cover 45 that together form the intake passage 60 connected to the upstream intake chamber 56. No gap for forming the intake passage 60 is provided between the overlaying portion 51 of the air cleaner case cover 45 and the second side plate 48 of the air cleaner case 41. As a result, the air cleaner case cover 45 is inhibited from protruding laterally outward, so that the lateral dimension can be kept small. In addition, the inlet 44a of the intake duct 44 is disposed frontward relative to the vehicle fore-and-aft midpoint 41m of the air cleaner case 41, and the rear intake port 60a of the intake passage 60 is positioned rearward relative to the vehicle fore-and-aft midpoint 41m of the air cleaner case 41. This enables the intake passage 60 that is upstream of the intake duct 44 to have a sufficient length. Thus, while the air cleaner 40 is disposed above the transmission unit 20A, the intake passage 60 that is upstream of the intake duct 44 is allowed to have a sufficient length, so that the lateral dimension can be kept small.

Because the intake passage 60 has a sufficient length, the intake passage 60 has sufficient space for accommodating the pre-filter element 57. In the present preferred embodiment, the pre-filter element 57 is disposed inside the intake passage 60 (see Fig. 8). This enables the pre-filter element 57 to clean the air in the intake passage 60 that is upstream of the intake duct 44. Mud and dust are more effectively prevented from entering the air cleaner 40.

In the present preferred embodiment, the transmission unit 20A includes the lower inclined portion 30a and the upper inclined portion 30b in a region rearward relative to the rear intake port 60a, as illustrated in Fig. 9. As a result, mud and dust swirled up from the road surface are likely to be blocked by the lower inclined portion 30a. Therefore, mud and dust can be more effectively prevented from moving along the surface of the transmission unit 20A and entering the intake passage 60.

In the present preferred embodiment, the partition plate 55 is disposed between the intake duct 27 and the intake duct 44 (see Figs. 7 and 8). This partition plate 55 prevents the air flowing through the intake passage 60 from being sucked into the intake duct 27. Thus, the air inside the intake passage 60 can be introduced smoothly into the intake duct 44.

In the present preferred embodiment, the collecting member 53 is provided inside the downstream intake chamber 41c, as illustrated in Fig. 6. The air that has flowed from the intake duct 44 into the downstream intake chamber 41c blows against the collecting member 53. The dust and water contained in the air are collected by the collecting member 53. Thus, the present preferred embodiment enables the air from the intake duct 44 to be cleaned by the collecting member 53.

According to the present preferred embodiment, the scooter type motorcycle 1 is furnished with the resonator 70 having the inlet 73 disposed in the upstream intake chamber 56 (see Figs. 6 and 7). Thus, with the resonator 70, air intake noise from the upstream intake chamber 56 can be reduced, and consequently, air intake noise from the air cleaner 40 can be reduced.

It should be noted that the first case part 41A and the partition plate 42, to which the filter element 43 is attached, are component parts inherently provided in the air cleaner 40. The present preferred embodiment does not require dedicated component parts for forming the resonator 70. Moreover, the resonator 70 does not project laterally outward relative to the first case part 41A. Thus, although the resonator 70 is provided, parts count can be reduced, and the lateral dimension can be kept small.

In the present preferred embodiment, the air cleaner case cover 45 has holes 62 positioned on the extension lines of the center axes of the threaded fasteners 54, which fasten the first case part 41A and the second case part 41B together. According to the present preferred embodiment, a tool such as a screw driver can be inserted into the holes 62 to rotate the threaded fasteners 54, so that the first case part 41A can be removed from the second case part 41B. This means that the first case part 41A can be removed from the second case part 41B without removing the air cleaner case cover 45 from the first case part 41A, so that the filter element 43 can be replaced. This affords easy replacement of the filter element 43.

In the foregoing preferred embodiment, the transmission case 25 and the transmission case cover 30 of the transmission unit 20A are separate parts. However, the transmission case 25 and the transmission case cover 30 may be an integral part. It is also possible that the transmission unit 20A may include the CVT 20 and the transmission case 25 but may not include the transmission case cover 30.

In the foregoing preferred embodiment, the first case part 41A and the air cleaner case cover 45 of the air cleaner 40 are separate parts. However, the first case part 41A and the air cleaner case cover 45 may be an integral part.

In the foregoing preferred embodiment, the intake duct 27 and the transmission case cover 30 are made of synthetic resin. The first case part 41A, the second case part 41B, the partition plate 42, the intake duct 44, and the intake pipe 85 are also made of synthetic resin. However, the material for these components is not limited to synthetic resin.

### REFERENCE SIGNS LIST

- 1 --: Scooter type motorcycle
- 4 --: Rear wheel
- 19 --: First side plate
- 20 --: V-belt type continuously variable transmission
- 20A --: Transmission unit
- 41 -: Air cleaner case
- 44 --: Intake duct
- 45 --: Air cleaner case cover
- 46 --: Vertical plate
- 47 --: Horizontal plate
- 48 --: Second side plate
- 50 --: Spacing portion
- 51 --: Overlaying portion
- 52 --: Downwardly-extending portion
- 56 --: Upstream intake chamber
- 60 --: Intake passage
- 60a --: Intake port

## Claims

1. A scooter type motorcycle comprising:
a rear wheel (4);
a transmission unit (20A) disposed sideward of the rear wheel (4);
a V-belt type continuously variable transmission (20) disposed in the transmission unit (20A);
an air cleaner case (41) disposed above the transmission unit (20A) and including a downstream intake chamber (41c) formed therein;
an intake duct (44) provided on the air cleaner case (41); and
an air cleaner case cover (45) disposed laterally outward of the air cleaner case (41) and including a lower end portion positioned downward relative to an upper end of the transmission unit (20A), wherein:
the air cleaner case (41) comprises: a first side plate (19) extending along a vehicle vertical axis and a vehicle fore-and-aft axis; a vertical plate (46), disposed upward relative to the transmission unit (20A), extending laterally outward from the first side plate (19) and extending along the vehicle vertical axis; a horizontal plate (47) extending rearward from a lower end of the vertical plate (46) and extending along a vehicle lateral axis, the horizontal plate (47) spaced upwardly apart from the transmission unit (20A); and a second side plate (48) extending rearward along the vehicle fore-and-aft axis from a laterally outer end portion of the vertical plate (46) and extending along the vehicle vertical axis from a laterally outer end portion of the horizontal plate (47);
the intake duct (44) pierces through the vertical plate (46) and includes an inlet (44a) disposed frontward relative to a vehicle fore-and-aft midpoint (41m) of the air cleaner case (41) and frontward relative to the vertical plate (46), and an outlet (44b) disposed rearward relative to the vertical plate (46);
the air cleaner case cover (45) comprises a spacing portion (50) disposed sideward of the first side plate (19) and spaced apart from the first side plate (19), and a downwardly-extending portion (52) extending downward;
the spacing portion (50) of the air cleaner case cover (45), the first side plate (19), and the vertical plate (46) together define at least a portion of an upstream intake chamber (56), the air cleaner case cover (45) comprises an overlaying portion (51) overlaying the second side plate (48) so as not to be spaced apart from the second side plate (48), the downwardly-extending portion (52) is extending downward from the overlaying portion (51), wherein
the horizontal plate (47), the transmission unit (20A), and the downwardly-extending portion (52) of the air cleaner case cover (45) together form an intake passage (60) being connected to the upstream intake chamber (56) and having an intake port (60a) **characterized in that** the intake port (60a) is located rearward relative to the vehicle fore-and-aft midpoint (41m) of the air cleaner case (41).

2. The scooter type motorcycle according to claim 1, **characterized by** a pre-filter element (57) disposed between the horizontal plate (47) and the transmission unit (20A) and inside the intake passage (60).

3. The scooter type motorcycle according to claim 1 or 2, **characterized in that** the transmission unit (20A) includes a lower inclined portion (30a) inclined laterally more outward toward its top, and an upper inclined portion (30b) positioned above the lower inclined portion (30a) and inclined laterally more inward toward its top, the lower inclined portion (30a) and the upper inclined portion (30b) disposed in a region rearward relative to the intake port (60a) of the intake passage (60) along the vehicle fore-and-aft axis.

4. The scooter type motorcycle according to any one of claims 1 to 3, **characterized by:**
an additional intake duct (27) provided in the transmission unit (20A) and positioned frontward relative to a vehicle fore-and-aft midpoint of the transmission unit (20A), and wherein
at least one of the air cleaner case (41) and the air cleaner case cover (45) includes a partition plate (55) disposed between the intake duct (44) and the additional intake duct (27).

5. The scooter type motorcycle according to any one of claims 1 to 4, **characterized by** a collecting member (53) disposed inside the downstream intake chamber (41c), at least a portion of the collecting member (53) being disposed on an extension line (44e) of a center line of the intake duct (44) extending from the outlet (44b).

6. The scooter type motorcycle according to any one of claims 1 to 5, **characterized by** a resonator (70) including an inlet (73) disposed in the upstream intake chamber (56).

7. The scooter type motorcycle according to claim 6, **characterized in that:**
the air cleaner case (41) comprises a first case part (41A) including the first side plate (19), the vertical plate (46), the horizontal plate (47), and the second side plate (48), and a second case part (41B) disposed laterally inward of the first case part (41A) and assembled to the first case part (41A); and
the scooter type motorcycle further comprising:
a partition plate (42) disposed between the first case part (41A) and the second case part (41B); and
a filter element (43) provided on the partition plate (42), and wherein
the resonator (70) includes a chamber (71) defined by the partition plate (42) and the first side plate (19) of the first case part (41A).

8. The scooter type motorcycle according to any one of claims 1 to 6, **characterized in that:**
the air cleaner case (41) comprises a first case part (41A) including the first side plate (19), the vertical plate (46), the horizontal plate (47), and the second side plate (48); and a second case part (41B) disposed laterally inward of the first case part (41A) and fastened to the first case part (41A) by threaded fasteners (54); and
the scooter type motorcycle further comprising:
a filter element (43) disposed between the first case part (41A) and the second case part (41B); and wherein
the air cleaner case cover (45) includes holes (62) positioned on extension lines of the center axes of the threaded fasteners (54).

## Patentansprüche

1. Ein Scooter-Typ-Motorrad, das umfasst:
ein Hinter-Rad (4);
eine Getriebe-Einheit (20A), die seitwärts von dem Hinter-Rad (4) positioniert ist;
ein V-Riemen-Typ-Kontinuierlich-Variables-Getriebe (20), das in der Getriebe-Einheit (20A) positioniert ist;
ein Luftfilter-Gehäuse (41), das oberhalb der Getriebe-Einheit (20A) positioniert ist und eine Strom-Ab-Einlass-Kammer (41c) beinhaltet, die darin ausgebildet ist;
einen Einlass-Kanal (44), der an dem Luftfilter-Gehäuse (41) vorgesehen ist; und
eine Luftfilter-Gehäuse-Abdeckung (45), die quer außerhalb von dem Luftfilter-Gehäuse (41) positioniert ist, und einen unteren End-Abschnitt beinhaltet, der unterhalb relativ zu einem oberen Ende von der Getriebe-Einheit (20A) positioniert ist, wobei:
das Luftfilter-Gehäuse (41) umfasst: eine erste Seiten-Platte (19), die sich entlang einer Fahrzeug-Vertikal-Achse und einer Fahrzeug-Vorwärts-und-Rückwärts-Achse erstreckt; eine Vertikal-Platte (46), die oberhalb relativ zu der Getriebe-Einheit (20A) positioniert ist, sich lateral nach außen von der ersten Seiten-Platte (19) erstreckt und sich entlang der Fahrzeug-Vertikal-Achse erstreckt; eine Horizontal-Platte (47), die sich nach hinten von einem unteren Ende von der Vertikal-Platte (46) erstreckt, und sich entlang einer Fahrzeug-Quer-Achse erstreckt, die Horizontal-Platte (47) ist nach oben von der Getriebe-Einheit (20A) beabstandet; und eine zweite Seiten-Platte (48), die sich nach hinten entlang der Fahrzeug-Vorwärts-und-Rückwärts-Achse von einem Quer-Außen-End-Abschnitt von der Vertikal-Platte (46) erstreckt, und sich entlang der Fahrzeug-Vertikal-Achse von einem Quer-Außen-End-Abschnitt von der Horizontal-Platte (47) erstreckt;
der Einlass-Kanal (44) stößt durch die Vertikal-Platte (46) und beinhaltet einen Einlass (44a), der vorwärts relativ zu einem Fahrzeug-Vorwärts-und-Rückwärts-Mittelpunkt (41m) von dem Luftfilter-Gehäuse (41) positioniert ist, und vorwärts relativ zu der Vertikal-Platte (46) positioniert ist, und einen Auslass (44b), der rückwärtig relativ zu der Vertikal-Platte (46) positioniert ist;
die Luftfilter-Gehäuse-Abdeckung (45) umfasst einen Zwischenraum-Abschnitt (50), der seitwärts von der ersten Seiten-Platte (19) und beabstandet von der ersten Seiten-Platte (19) positioniert ist, und einen nach unten erstreckenden Abschnitt (52), der sich nach unten erstreckt;
der Zwischenraum-Abschnitt (50) von der Luftfilter-Gehäuse-Abdeckung (45), die erste Seiten-Platte (19) und die Vertikal-Platte (46) definieren zusammen zumindest einen Abschnitt von einer Strom-Auf-Einlass-Kammer (56), die Luftfilter-Gehäuse-Abdeckung (45) umfasst einen Überlagerungs-Abschnitt (51), der die zweite Seiten-Platte (48) überlagert, so dass diese nicht von der zweiten Seiten-Platte (48) beabstandet ist, der nach unten erstreckende Abschnitt (52) erstreckt sich nach unten von dem Überlagerungs-Abschnitt (51), wobei
die Horizontal-Platte (47), die Getriebe-Einheit (20A), und der nach unten erstreckende Abschnitt (52) von der Luftfilter-Gehäuse-Abdeckung (45) zusammen einen Einlass-Durchgang (60) bilden, der mit der Strom-Auf-Einlass-Kammer (56) verbunden ist, und einen Einlass-Kanal (60a) hat, **dadurch gekennzeichnet, dass** der Einlass-Kanal (60a) rückwärtig relativ zu dem Fahrzeug-Vorwärts-und-Rückwärts-Mittelpunkt (41m) von dem Luftfilter-Gehäuse (41) angeordnet ist.

2. Das Scooter-Typ-Motorrad gemäß Anspruch 1, **gekennzeichnet durch** ein VorFilter-Element (57), das zwischen der Horizontal-Platte (47) und der Getriebe-Einheit (20A) und innerhalb des Einlass-Durchgangs (60) positioniert ist.

3. Das Scooter-Typ-Motorrad gemäß Anspruch 1 oder 2, **dadurch gekennzeichnet, dass** die Getriebe-Einheit (20A) einen unteren geneigten Abschnitt (30a), der quer mehr nach außen zu dessen Spitze geneigt ist, und einen oberen geneigten Abschnitt (30b), der oberhalb des unteren geneigten Abschnitts (30a) positioniert ist, und quer nach innen zu dessen Spitze geneigt ist, beinhaltet, der untere geneigte Abschnitt (30a) und der obere geneigte Abschnitt (30b) sind in einem Bereich rückwärtig relativ zu dem Einlass-Kanal (60a) von dem Einlass-Durchgang (60) entlang der Fahrzeug-Vorwärts-und-Rückwärts-Achse positioniert.

4. Das Scooter-Typ-Motorrad gemäß zu irgendeinem der Ansprüche 1 bis 3,
**gekennzeichnet durch:**
einen zusätzliche Einlass-Kanal (27), der in der Getriebe-Einheit (20A) vorgesehen ist und vorwärts relativ zu dem Fahrzeug-Vorwärts-und-Rückwärts-Mittelpunkt von der Getriebe-Einheit (20A) positioniert ist, und wobei
zumindest einer von dem Luftfilter-Gehäuse (41) und der Luftfilter-Gehäuse-Abdeckung (45) eine Unterteilungs-Platte (55) beinhaltet, die zwischen dem Einlass-Kanal (44) und dem zusätzlichen Einlass-Kanal (27) positioniert ist.

5. Das Scooter-Typ-Motorrad gemäß zu irgendeinem der Ansprüche 1 bis 4, **gekennzeichnet durch** ein Sammel-Element (53), das innerhalb der Strom-Ab-Einlass-Kammer (41c) positioniert ist, zumindest ein Abschnitt von dem Sammel-Element (53) ist an einer Erstreckungs-Linie (44e) von einer Mittel-Linie von dem Einlass-Kanal (44), der sich von dem Auslass (44b) erstreckt, positioniert.

6. Das Scooter-Typ-Motorrad gemäß zu irgendeinem der Ansprüche 1 bis 5, **gekennzeichnet durch** einen Resonator (70), der einen Einlass (73) beinhaltet, der in der Strom-Auf-Einlass-Kammer (56) positioniert ist.

7. Das Scooter-Typ-Motorrad gemäß Anspruch 6, **dadurch gekennzeichnet, dass**:
das Luftfilter-Gehäuse (41) einen ersten Gehäuse-Teil (41A), der die erste Seiten-Platte (19), die Vertikal-Platte (46), die Horizontal-Platte (47) und die zweite Seiten-Platte (48) beinhaltet, und einen zweiten Gehäuse-Teil (41B), der quer nach innen von dem ersten Gehäuse-Teil (41A) positioniert ist, und mit dem ersten Gehäuse-Teil (41A) zusammengebaut ist, umfasst; und
das Scooter-Typ-Motorrad umfasst weiterhin:
eine Unterteilungs-Platte (42), die zwischen dem ersten Gehäuse-Teil (41A) und dem zweiten Gehäuse-Teil (41B) positioniert ist; und
ein Filter-Element (43), das an der Unterteilungs-Platte (42) vorgesehen ist, und wobei
der Resonator (70) eine Kammer (71) beinhaltet, die durch die Unterteilungs-Platte (42) und die erste Seiten-Platte (19) von dem ersten Gehäuse-Teil (41A) definiert ist.

8. Das Scooter-Typ-Motorrad gemäß zu irgendeinem der Ansprüche 1 bis 6, **dadurch gekennzeichnet, dass:**
das Luftfilter-Gehäuse (41) einen ersten Gehäuse-Teil (41A), der die erste Seiten-Platte (19), die Vertikal-Platte (46), die Horizontal-Platte (47) und die zweite Seiten-Platte (48) beinhaltet; und einen zweiten Gehäuse-Teil (41B), der quer nach innen von dem ersten Gehäuse-Teil (41A) positioniert ist, und mit dem ersten Gehäuse-Teil (41A) durch Schraub-Befestiger (54) befestigt ist, umfasst; und
das Scooter-Typ-Motorrad umfasst weiterhin:
ein Filter-Element (43), das zwischen dem ersten Gehäuse-Teil (41A) und dem zweiten Gehäuse-Teil (41B) positioniert ist; und wobei
die Luftfilter-Gehäuse-Abdeckung (45) Löcher (62) beinhaltet, die an Erstreckungs-Linien von den Mitten-Linien von den Schraub-Befestigern (54) positioniert sind.

## Revendications

1. Motocyclette de type scooter comprenant :
une roue arrière (4),
une unité de transmission (20A) disposée sur le côté de la roue arrière (4),
une transmission continûment variable de type à courroie trapézoïdale (20) disposée dans l'unité de transmission (20A),
un carter de filtre à air (41) disposé au-dessus de l'unité de transmission (20A) et incluant une chambre d'admission aval (41c) formée dans celui-ci,
une conduite d'admission (44) prévue sur le carter de filtre à air (41), et
un couvercle de carter de filtre à air (45) disposé latéralement vers l'extérieur du carter de filtre à air (41) et incluant une extrémité inférieure positionnée vers le bas par rapport à l'extrémité supérieure de l'unité de transmission (20A), où
le carter de filtre à air (41) comprend : une première plaque latérale (19) s'étendant le long de l'axe vertical du véhicule et de l'axe avant arrière du véhicule ; une plaque verticale (46) disposée vers le haut par rapport à l'unité de transmission (20A), s'étendant latéralement vers l'extérieur depuis la première plaque latérale (19) et s'étendant le long de l'axe vertical du véhicule ; une plaque horizontale (47) s'étendant vers l'arrière depuis l'extrémité inférieure de la plaque verticale (46) et s'étendant le long d'un axe latéral du véhicule, la plaque horizontale (47) étant écartée vers le haut par rapport à l'unité de transmission (20A) ; ainsi qu'une seconde plaque latérale (48) s'étendant vers l'arrière le long de la direction avant arrière du véhicule depuis une extrémité latéralement externe de la plaque verticale (46) et s'étendant le long de l'axe vertical du véhicule à partir d'une extrémité latéralement externe de la plaque horizontale (47),
la conduite d'admission (44) traverse la plaque verticale (46) est inclus un orifice d'entrée (44a) disposé vers l'avant par rapport au point milieu d'avant en arrière du véhicule (41m) du carter de filtre à air (41) et vers l'avant par rapport à la plaque verticale (46), ainsi qu'un orifice de sortie (44b) disposé vers l'arrière par rapport à la plaque verticale (46),
le couvercle de carter de filtre à air (45) comprend une partie intercalaire (50) disposée sur le côté de la première plaque latérale (19) et à distance de la première plaque latérale (19), et une partie s'étendant vers le bas (52) qui s'étend vers le bas,
la partie intercalaire (50) du couvercle de carter de filtre à air (45), la première plaque latérale (19) et la plaque verticale (46) définissent ensemble au moins une partie d'une chambre d'admission amont (56),
le couvercle de carter de filtre à air (45) comprend une partie en chevauchement (51) qui chevauche la seconde plaque latérale (48) de sorte à ne pas être écartée de la seconde plaque latérale (48), la partie s'étendant vers le bas (52) se prolonge vers le bas à partir de la partie en chevauchement (51), où
la plaque horizontale (47), l'unité de transmission (20A) et la partie s'étendant vers le bas (52) du couvercle de carter de filtre à air (45) forment ensemble un passage d'admission (60) raccordé à la chambre d'admission amont (56) et comportant une lumière d'admission (60a),
**caractérisé en ce que** la lumière d'admission (60a) est située vers l'arrière par rapport au point milieu d'avant en arrière du véhicule (41m) du carter de filtre à air (41).

2. Motocyclette de type scooter selon la revendication 1, **caractérisée par** un élément de pré filtrage (57) disposé entre la plaque horizontale (47) et l'unité de transmission (20A) et à l'intérieur du passage d'admission (60) .

3. Motocyclette de type scooter selon la revendication 1 ou la revendication 2, **caractérisée en ce que** l'unité de transmission (20A) inclut une partie inclinée inférieure (30a) qui est inclinée latéralement plus vers l'extérieur en direction de son sommet, et une partie inclinée supérieure (30b) positionnée au-dessus de la partie inclinée inférieure (30a) et inclinée latéralement plus vers l'intérieur en direction de son sommet, la partie inclinée inférieure (30a) et la partie inclinée supérieure (30b) étant disposées dans une zone vers l'arrière par rapport à la lumière d'admission (60a) du passage d'admission (60) le long de l'axe avant arrière du véhicule.

4. Motocyclette de type scooter selon l'une quelconque des revendications 1 à 3, **caractérisée par** une conduite d'admission supplémentaire (27) prévue dans l'unité de transmission (20A) et positionnée vers l'avant par rapport au point milieu d'avant en arrière du véhicule de l'unité de transmission (20A), et où
au moins l'un parmi le carter de filtre à air (41) et le couvercle de carter de filtre à air (45) inclut une plaque de séparation (55) disposée entre la conduite d'admission (44) et la conduite d'admission supplémentaire (27).

5. Motocyclette de type scooter selon l'une quelconque des revendications 1 à 4, **caractérisée par** un élément de recueil (53) disposé à l'intérieur de la chambre d'admission aval (41c), au moins une partie de l'élément de recueil (53) étant disposée sur une ligne d'extension (44e) de l'axe central de la conduite d'admission (44) qui s'étend depuis l'orifice de sortie (44b).

6. Motocyclette de type scooter selon l'une quelconque des revendications 1 à 5, **caractérisée par** un résonateur (70) incluant un orifice d'entrée (73) disposé dans la chambre d'admission amont (56).

7. Motocyclette de type scooter selon la revendication 6, **caractérisée en ce que :**
le carter de filtre à air (41) comprend un premier composant de carter (41A) incluant la première plaque latérale (19), la plaque verticale (46), la plaque horizontale (47) et la seconde plaque latérale (48), ainsi qu'un second composant de carter (41B) disposé latéralement vers l'intérieur du premier composant de carter (41A) et assemblé sur le premier composant de carter (41A), et
la motocyclette de type scooter comprend en outre :
une plaque de séparation (42) disposée entre le premier composant de carter (41A) et le second composant de carter (41B), et
un élément de filtrage (43) disposé sur la plaque de séparation (42) et dans lequel
le résonateur (70) inclut une chambre (71) définie par la plaque de séparation (42) et la première plaque latérale (19) du premier composant de carter (41A).

8. Motocyclette de type scooter selon l'une quelconque des revendications 1 à 6, **caractérisée en ce que :**
le carter de filtre à air (41) comprend un premier composant de carter (41A) incluant la première plaque latérale (19), la plaque verticale (46), la plaque horizontale (47) et la seconde plaque latérale (48), ainsi qu'un second composant de carter (41B) disposé latéralement vers l'intérieur du premier composant de carter (41A) et fixé au premier composant de carter (41A) grâce à des attaches filetées (54), et
la motocyclette type scooter comprend en outre :
un élément de filtrage (43) disposé entre le premier composant de carter (41A) et le second composant de carter (41B), et dans lequel
le couvercle de carter de filtre à air (45) inclut des alésages (62) positionnés sur des lignes d'extension des axes centraux des attaches filetées (54).
